# EUROPEAN PATENT SPECIFICATION

(11) **EP 3 531 739 B1**
(45) Date of publication and mention of the grant of the patent: **14.07.2021**
(21) Application number: 18158102.6
(22) Date of filing: 22.02.2018
(51) Int. Cl.: H04W 24/06, H04W 28/26

(54) **TESTING THE RESOURCE RESERVATION BEHAVIOR OF AT LEAST A FIRST DEVICE UNDER TEST IN AN EMULATED DEVICE-TO-DEVICE NETWORK ENVIRONMENT**
TESTEN DES RESSOURCENRESERVIERUNGSVERHALTENS ZUMINDEST EINER ERSTEN ZU TESTENDEN VORRICHTUNG IN EINER EMULIERTEN VORRICHTUNG-ZU-VORRICHTUNG-NETZUMGEBUNG
TEST DU COMPORTEMENT DE RÉSERVATION DE RESSOURCES D'AU MOINS UN PREMIER DISPOSITIF SOUS TEST DANS UN ENVIRONNEMENT ÉMULÉ DE RÉSEAU DISPOSITIF-À-DISPOSITIF

(43) Date of publication of application: 28.08.2019
(73) Proprietor: Rohde & Schwarz GmbH & Co. KG, 81671 München (DE)
(72) Inventor: KANG, Woo Seok, 486041 Singapore (SG); HUR, Yong Suk, 479269 Singapore (SG)
(74) Representative: Prinz & Partner mbB

(56) References cited:
- WO-A1-2015/140039
- US-A1- 2016 050 572
- US-A1- 2017 295 507
- MCC TF160: "V2V/V2X: Initial Test Model and ASPs", 3GPP DRAFT; R5W170205 36523-3 V2X, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG5, no. Sophia Antipolis, France; 20170705 3 July 2017 (2017-07-03), XP051309109, Retrieved from the Internet: URL:http://www.3gpp.org/ftp/tsg_ran/WG5_Te st_ex-T1/Workshop/TSGR5_WorkShop_2017/Docs / [retrieved on 2017-07-03]
- GENERAL DYNAMICS BROADBAND UK: "Simulation results for D2D voice services using connectionless approach", 3GPP DRAFT; R2-134431 SIMULATION RESULTS FOR D2D VOICE SERVICES USING CONNECTIONLESS APPROACH, 3RD GENERATION PARTNERSHIP PROJECT (3GPP), MOBILE COMPETENCE CENTRE ; 650, ROUTE DES LUCIOLES ; F-06921 S , vol. RAN WG2, no. San Francisco, USA; 20131111 - 20131115 8 November 2013 (2013-11-08), XP050753517, Retrieved from the Internet: URL:http://www.3gpp.org/ftp/tsg_ran/WG2_RL 2/TSGR2_84/Docs/ [retrieved on 2013-11-08]

## Description

The invention relates to a test system to test the reservation behavior of at least a first device under test, a test setup for testing device-to-device communication in a network as well as a method for testing the reservation behavior of at least a first device under test.

Device-to-device communication in cellular networks or mobile networks, like GSM, LTE, UMTS, and next generation (5G) networks, become more and more common. Especially with the advancement of the Internet of Things, Smart Cities and autonomous driving, devices need to communicate with each other in a direct, fast and reliable way.

However, the physical resource of a radio network is limited so that single or several resource blocks or resource elements for the desired device-to-device communication have to be reserved by the devices communicating with each other.

Due to the plurality of manufacturers for network devices, it is necessary to understand the reservation behavior of each device and to test the compatibility of a device with a certain network.

US 2016/050572 A1 discloses a test apparatus and method for testing user equipment, the test apparatus comprising an emulation module which is configured to emulate the functionality of a first user equipment and to establish a wireless D2D communication link between the first user equipment and an externally arranged second user equipment which forms a user equipment under test. The test apparatus also comprises a test module which is configured to test a second user equipment after being connected to the emulated first user equipment of the emulation module via the established D2D communication link.

MCC TF 160: "V2V/V2X: Initial Test Model an ASPs", 3GPP draft, R5W170205 36523-3 V2X discloses a device-to-device proximity services test model and a test method for device-to-device proximity services.

WO 2015/140039 A1 discloses schemes for supporting device-to-device, D2D, communications between terminal devices in a wireless telecommunication system. A network entity establishes a set of radio resources to be reserved for use for D2D communications and communicates an indication of these resources to terminal devices. The terminal devices may then proceed to undertake D2D communications using the reserved set of radio resources. On an ongoing basis the network entity monitors the extent to which the set of radio resources reserved for D2D communications is being used. If it is determined the set of radio resources reserved for D2D communications is being under-utilized or over-utilized, the network entity may establish an updated set of radio resources to be used for D2D communications, and communicate this to the terminal devices.

US 2017/295507 A1 discloses a mobile communication test device for testing a mobile user equipment.

General Dynamics Broadband UK: "Simulation results for D2D voice services using connectionless approach", 3GPP draft, R2-134431, relates to a connectionless approach to device-to-device voice communication and discloses a UE which searches for free resources and then transmits a message on a reservation channel which indicates where these resources are.

Thus, it is the object of the invention to provide a test system, a test setup and a method for testing the reservation behavior of a network device, i.e. a device under test (DUT).

For this purpose, a test system according to claim 1 is provided.

Further, for this purpose a test setup according to claim 10 is provided.

Furthermore for this purpose, a method for testing the reservation behavior of a first device under test according to claim 12 is provided.

By emulating a network environment the device under test (DUT) behaves the same way as it were in a real network environment. Thus, the DUT has to find available resources and reserve a suitable resource. The communication of the DUT during reservation, i.e. the protocol messages, reflect the reservation behavior of the DUT so that the reservation behavior of the DUT can be determined in detail without the need for internal information about the DUT itself.

Further, also the compatibility of the DUT under test with a specific network can be tested.

The resource is in particular the physical resource of the network environment that may be seen as a time-frequency grid. The network environment may be a cellular or mobile network environment, for example a GSM, UMTS or LTE network or a next generation of telecommunication networks (5G).

The resource reservation behavior includes the way, the power used and/or the performance of the first device under test to scan the resource, to identify a suitable available resource and/or to communicate the use or reservation of the available resource found.

Preferably, the resource of the network environment is a resource pool for device-to-device communication so that information about the device-to-device communication behavior can be gained.

For example, the device-to-device network environment comprises resource block allocation to provide a stable communication in the network environment.

In an aspect, the resource reservation parameters include information on the status of a resource block and/or a resource element of the resource. Thus, resources can be managed efficiently.

In order to establish a reliable way of indicating the availability of a resource, the information includes the reservation status and/or the power level of the part of the resource.

To increase the knowledge about the resource reservation behavior of the first device under test, the resource reservation module is configured to challenge the resources reservation behavior of the first device under test.

For example, the network emulation unit is adapted to set control information and/or resource reservation parameters in at least part of the resource, in particular in at least one resource block of the resource for controlling the resource reservation behavior of the first device under test. This is also a possible way to challenge the resource reservation behavior.

In another embodiment, the resource reservation module has access to a memory having a least one set of resource reservation parameters, in particular wherein the set of resource reservation parameters has been recorded in a real network environment. In doing so, different situations of the network environment can be simulated for testing.

For effective tests of the device-to-device communication of the first device under test, the network emulation unit comprises at least one simulation module for creating at least one virtual network device communicating with the first device under test, in particular a virtual user equipment or a car component.

For example, the test setup comprises a second device under test, wherein the second device under test is connected to the device-to-device network environment emulated by the test system, wherein the second device under test is configured to communicate with the first device under test and/or the network emulation unit.

This way, the communication between two real devices and/or concurrent reservation behavior of two devices under test may be analyzed. In addition, the reservation behavior of both DUTs can be tested.

For the communication between the first and second device under test the emulated network environment is used.

Additional features and advantages of the invention will be apparent from the following description of the embodiments and the attached drawings to which reference is made. In the drawings:
- Figure 1 shows schematically a test setup according to the invention with a test system according to the invention,
- Figure 2 shows the devices under test of the test system according to Figure 1 in the emulated device-to-device network environment created by the test system according to Figure 1,
- Figure 3 shows a schematic illustration of the resource of the device-to-device network environment emulated by the test system according to Figure 1 with a device under test in a first situation, and
- Figure 4 shows a second situation of the resource and the device under test according to Figure 3.

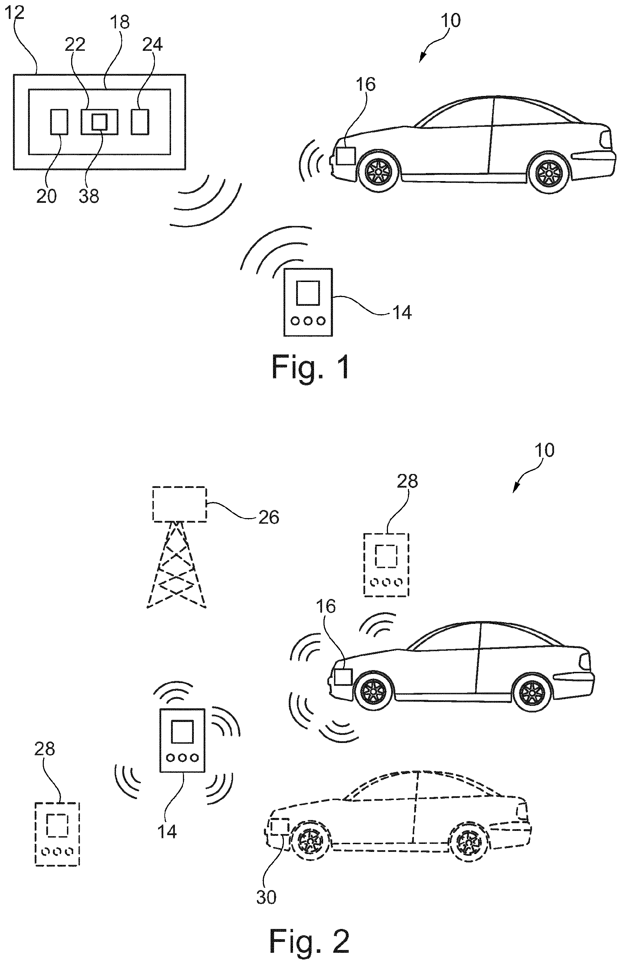

Figure 1 shows schematically a test setup 10 with a test system 12, a first device under test (DUT) 14, and a second device under test 16.

Both DUTs 14, 16 are mobile network devices.

The first DUT 14 may be a user equipment like a mobile telephone, a smartphone, a laptop computer, a tablet or the like.

The second DUT 16 is depicted as a component of a car (entertainment and/or safety component) with wireless communication abilities.

Of course, the first DUT 14 and the second DUT 16 may both be user equipment or car components. Further, the first and/or the second DUT 14, 16 may also be other network devices, like sensors and displays in a machine, hospital, household appliance, train stations, airports, bus stops or the like.

The test system 12 comprises a network emulation unit 18. The network emulation unit 18 has a protocol testing module 20, a resource reservation module 22 and a simulation module 24.

Further, the test system 12 comprises at least one antenna (not shown) that may be driven by the network emulation unit 18.

The network emulation unit 18 is able to and configured to create a network environment, especially comprising a device-to-device network environment.

The network environment may be a cellular network or mobile network, like a GSM, UMTS or LTE network or a next generation telecommunication network (5G).

The first DUT 14 and the second DUT 16 are connected to the network of the network environment and are thus part of the network environment created by the network emulation unit 18.

In Figure 2, the emulated network environment is illustrated. In this figure, the physical first DUT 14 and the second DUT 16 are drawn with solid lines, whereas the test system 12 is not shown. Instead, the components of the network environment that are emulated by the network emulation unit 18 of the test system 12 are illustrated in dash lines.

In the shown embodiment, the network emulation unit 18 emulates a base station 26 and several network devices, like other user equipment 28 or a car component 30.

The user equipment 28 and the car component 30 may be created using the simulation module 24 of the network emulation unit 18.

Of course, any other network device could also be simulated by the network emulation unit 18 and the simulation module 24.

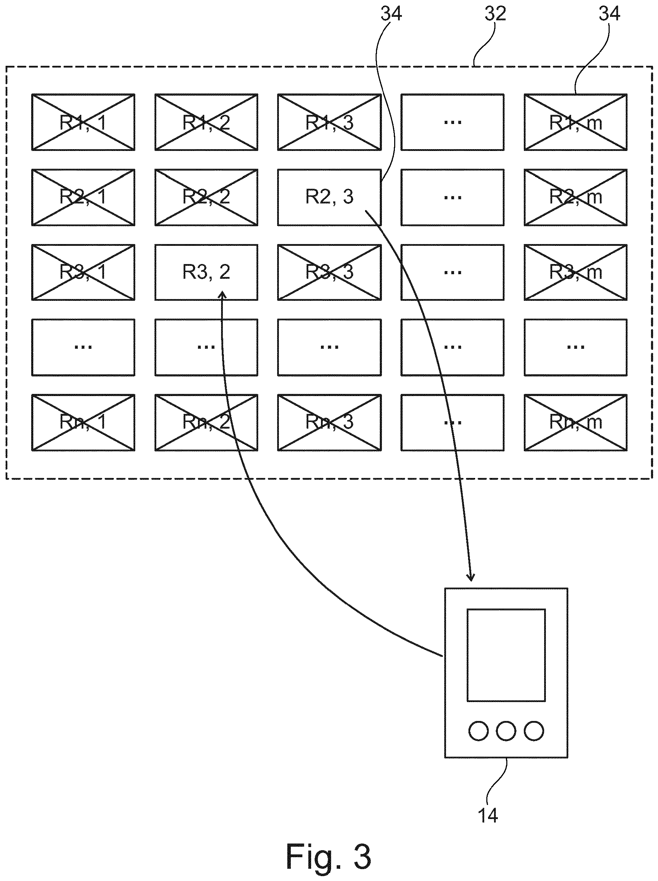

The network environment emulated by the network emulation unit 18 has a physical resource 32 illustrated in Figure 3 as a time-frequency grid. The physical resource 32 may be the resource of an LTE network or a 5G network.

In a known manner, the physical resource may be divided into resource blocks 34 and even further into resource elements. The resource blocks 34 and resource elements are thus a part of the resource 32.

Each resource element or each resource block 34 defines a specific time and frequency interval in a radio frame of the resource of the network environment.

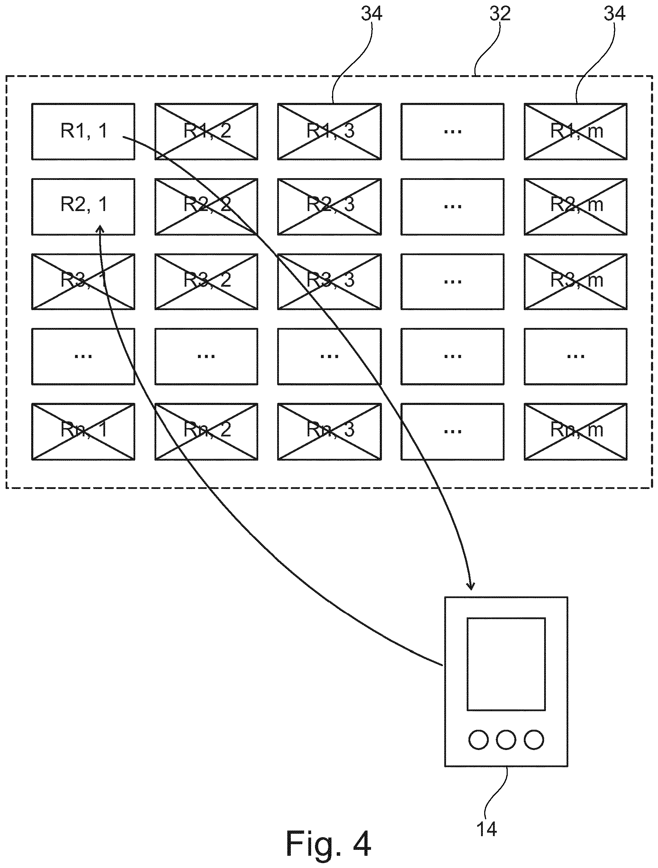

In Figures 3 and 4, resource blocks 34 of the physical resource 32 are shown building a time-frequency grid. Each resource block is labeled Rn,m, wherein the first index (n) denotes the time slot and the second index (m) denotes the frequency or subcarrier of the resource block 34.

In the shown embodiment, the physical resource 32 of the network environment is a resource pool for device-to-device communication.

In the following, only resource blocks 34 are described for simplicity. However, the method could also be carried out using resource elements instead of entire resource blocks 34.

The physical resource 32 and thus the resource blocks 34 are shared by the devices in the network environment.

A resource block 34 may be allocated to a specific network device for communicating with the base station 26 or for device-to-device communication. This resource block allocation is also performed in the emulated device-to-device network environment created by the test system 12.

The status and availability of a resource block 34 is part of the resource reservation parameters that may be transmitted to each of the devices with protocol information of the specific network environment.

In order to simulate a realistic scenario of the network environment, the resource reservation module 22 sets the resource reservation parameters of the resource blocks 34.

The information on the status of part of the resource, i.e. a resource block 34 may include the reservation status and the power level of the specific resource block 34.

For testing the reservation behavior of the first device under test 14 or the second device under test 16, firstly the device-to-device network environment is created by the test system 12, more precisely the network emulation unit 18.

Then, the resource reservation module 22 sets the resource reservation parameters of each of the resource blocks 34 to specific values.

The resource parameters for the resource blocks 34 together are called a set of resource reservation parameters in the following.

A set of resource reservation parameters may be acquired by recording the resource reservation parameters in a real network under the desired condition. This way a field-to-lab scheme is used.

Of course, a set of resource reservation parameters may also be created artificially.

The resource reservation module 22 has access to a memory 38. In this memory 38, several sets of resource reservation parameters are stored. Each of the sets may correspond to a different situation and/or a different structure of the network environment.

The resource reservation module 22 thus selects a set of resource reservation parameters of the sets stored in the memory 38 and assigns the resource parameters of the set to the corresponding resource block 34 of the network environment.

In Figures 3 and 4 two different situations, i.e. two different sets of resource reservations parameters are shown. Reserved resource blocks 34, i.e. resource blocks 34 not available to be used by the first DUT 14 or the second DUT 16 are crossed out.

Further, only one device under test, namely the first device under test 14 is shown for simplicity. Of course, also the second DUT 16 or both DUTs 14, 16 connect to the network environment the same way.

After or before the resource reservation parameters are assigned, the first DUT 14 is connected to the network environment. For registering in the network environment, the first DUT 14 communicates with the base station 26, more precisely the network emulation unit 18.

When connecting to the network, the first DUT 14 is configured to establish a device-to-device communication with either the second DUT 16 or an emulated network device, like the virtual user equipment 28 or the virtual car component 30.

The first DUT 14 scans the physical resource 32 and the resource blocks 34 in order to find available, i.e. unoccupied resource blocks 34 that may be used for communication with either the second DUT 16 or an emulated network device, like the user equipment 28 or the car component 30.

During the registration and scanning of the physical resource 32, the first device under test 14 transmits and receives protocol messages. The protocol messages include resource reservation messages.

In the situation shown in Figure 3, the resource blocks R2,3 and R3,2 are available for a device to a device communication for the first DUT 14. During its scan of the physical resource 32, the first DUT 14 detects the availability of the resource blocks R2,3 and R3,2 and reserves these blocks by sending corresponding reservation messages. The resource blocks R2,3 and R3,2 may then be used for bidirectional data transfer with the second DUT 16 or another (virtual) network device.

During this process of reservation of resource blocks 34 by the first device under test 14, the protocol testing module 20 records the protocol messages and reservation messages sent and received by the first device under test 14.

The protocol testing module 20 then analyzes the protocol messages and its contents to determine the reservation behavior of the first device under test 14.

The reservation behavior may include the way the first DUT 14 scans the physical resource 32, the performance of the first DUT 14 during the scan and the signal power of the first DUT 14.

In order to study the reservation behavior of the first DUT 14 more precisely, the resource reservation module 22 challenges the resource reservation behavior of the first DUT 14, for example by changing the resource reservation parameters of the resource blocks 34. This can be done in a subsequent step.

The resource reservation module 22 then selects another set of parameters for the resource reservation parameters of each of the resource blocks 34 and applies them. This way, various patterns of resources occupied or available can be simulated. Figure 4 shows the availability of the resource blocks 34 of the physical resource 32 after the resource reservation module 22 has changed the resource reservation parameters.

In particular, the resource blocks 34 that have been available before the change, i.e. in the situation of Figure 3, are now occupied. The two available resource blocks are now R1,1 and R2,1.

The first DUT 14 is now challenged to find new available resource blocks 34. Thus, the first device under test 14 scans the physical resource 32 again. In doing so, it sends and receives more protocol messages that are recorded and analyzed by the protocol testing module 20.

The resource reservation module 22 may also challenge the reservation behavior of the first DUT 14 by changing control information of one of the resource blocks 34 or resource elements.

Further, the first DUT 14 may receive concurrent resource requests coming from the second DUT 16 and/or other (virtual) network devices. The first DUT 14 then has to schedule the available resource accordingly.

## Claims

1. Test system configured to test reservation behavior of a first device under test (14) and having a network emulation unit (18) for emulating a device-to-device network environment with a resource (32), **characterized by** the network emulation unit (18) comprising:
a protocol testing module (20) for recording and/or analyzing protocol messages, which include resource reservation messages, from and/or to the first device under test (14), wherein the protocol testing module (20) is configured to record and/or to analyze resource reservation messages from and/or to the first device under test (14), and
a resource reservation module (22) for setting resource reservation parameters of the resource of the network environment,
wherein the resource reservation behavior includes the way, the power used and/or the performance of the first device under test to scan the resource, to identify a suitable available resource and/or to communicate the use or reservation of the available resource found, and
wherein the resource reservation parameters include information on the status of a part of the resource (32).

2. Test system according to claim 1, wherein the resource (32) of the network environment is a resource pool for device-to-device communication.

3. Test system according to claim 1 or 2, wherein the device-to-device network environment comprises resource block allocations.

4. Test system according to any one of the preceding claims, wherein the resource reservation parameters include information on the status of a resource block (34) and/or a resource element of the resource.

5. Test system according to claim 4, wherein the information includes the reservation status and/or the power level of the part of the resource (32).

6. Test system according to any one of the preceding claims, wherein the resource reservation module (22) is configured to challenge the resources reservation behavior of the first device under test (14).

7. Test system according to any one of the preceding claims, wherein the network emulation unit is adapted to set control information and/or resource reservation parameters in at least part of the resource (32).

8. Test system according to any one of the preceding claims, wherein the resource reservation module (22) has access to a memory (38) having a least one set of resource reservation parameters.

9. Test system according to any one of the preceding claims, wherein the network emulation unit (18) comprises at least one simulation module (24) for creating at least one virtual network device communicating with the first device under test (14).

10. Test setup for testing device-to-device communication in a network environment, comprising
a test system (12) having a network emulation unit (18) for emulating a device-to-device network environment with a resource (12) according to any one of the preceding claims, and
a first device under test (14) connected to the emulated device-to-device network environment.

11. Test setup according to claim 10, wherein the test setup (10) comprises a second device under test (16), wherein the second device under test (16) is connected to the emulated device-to-device network environment, wherein the second device under test (16) is configured to communicate with the first device under test (14) and/or the network emulation unit (18).

12. Method for testing the reservation behavior of a first device under test (14) using a test system (12) according to any one of the claims 1 to 9, comprising the following steps:
a) emulating a device-to-device network environment having a resource (32) using the network emulation unit (18),
b) setting the resource reservation parameters of the resource (32) of the emulated network environment,
c) connecting the first device under test (14) with the emulated network environment,
d) recording and/or analyzing protocol messages and the resource reservation messages from and/or to the first device under test (14) using the protocol testing module (20),
wherein the resource reservation behavior includes the way, the power used and/or the performance of the first device under test to scan the resource, to identify a suitable available resource and/or to communicate the use or reservation of the available resource found, and
wherein the resource reservation parameters include information on the status of a part of the resource (32).

13. Method according to claim 12, wherein at least one virtual network device communicating with the first device under test (14) is created by a simulation module (24) of the test system (12).

14. Method according to claim 12 or 13, wherein the resource reservation module (22) challenges the resources reservation behavior of the first device under test (14) and/or the network emulation unit (18) changes the control information and/or resource reservation parameters in at least part of the resource (32).

## Patentansprüche

1. Testsystem, das dazu ausgelegt ist, ein Reservierungsverhalten einer ersten zu testenden Vorrichtung (14) zu testen, und das eine Netzwerkemulationseinheit (18) zum Emulieren einer Vorrichtung-zu-Vorrichtung-Netzwerkumgebung mit einer Ressource (32) aufweist, **dadurch gekennzeichnet, dass** die Netzwerkemulationseinheit (18) Folgendes umfasst:
ein Protokolltestmodul (20) zum Aufzeichnen und/oder Analysieren von Protokollnachrichten, die Ressourcenreservierungsnachrichten beinhalten, von der und/oder an die erste zu testende Vorrichtung (14), wobei das Protokolltestmodul (20) dazu ausgelegt ist, Ressourcenreservierungsnachrichten von der und/oder an die erste zu testende Vorrichtung (14) aufzuzeichnen und/oder zu analysieren, und
ein Ressourcenreservierungsmodul (22) zum Einstellen von Ressourcenreservierungsparametern der Ressource der Netzwerkumgebung,
wobei das Ressourcenreservierungsverhalten die Art, die verbrauchte Leistung und/oder das Leistungsvermögen der ersten zu testenden Vorrichtung zum Scannen der Ressource, zum Identifizieren einer geeigneten verfügbaren Ressource und/oder zum Kommunizieren der Verwendung oder der Reservierung der gefundenen verfügbaren Ressource beinhaltet, und
wobei die Ressourcenreservierungsparameter Informationen über den Status eines Teils der Ressource (32) beinhalten.

2. Testsystem nach Anspruch 1, wobei die Ressource (32) der Netzwerkumgebung ein Ressourcenpool für eine Vorrichtung-zu-Vorrichtung-Kommunikation ist.

3. Testsystem nach Anspruch 1 oder 2, wobei die Vorrichtung-zu-Vorrichtung-Netzwerkumgebung Ressourcenblockzuteilungen umfasst.

4. Testsystem nach einem der vorhergehenden Ansprüche, wobei die Ressourcenreservierungsparameter Informationen über den Status eines Ressourcenblocks (34) und/oder eines Ressourcenelements der Ressource beinhalten.

5. Testsystem nach Anspruch 4, wobei die Informationen den Reservierungsstatus und/oder den Leistungspegel des Teils der Ressource (32) beinhalten.

6. Testsystem nach einem der vorhergehenden Ansprüche, wobei das Ressourcenreservierungsmodul (22) dazu ausgelegt ist, das Ressourcenreservierungsverhalten der ersten zu testenden Vorrichtung (14) abzufragen.

7. Testsystem nach einem der vorhergehenden Ansprüche, wobei die Netzwerkemulationseinheit angepasst ist, Steuerinformationen und/oder Ressourcenreservierungsparameter in mindestens einem Teil der Ressource (32) einzustellen.

8. Testsystem nach einem der vorhergehenden Ansprüche, wobei das Ressourcenreservierungsmodul (22) Zugriff auf einen Speicher (38) hat, der mindestens einen Satz von Ressourcenreservierungsparametern aufweist.

9. Testsystem nach einem der vorhergehenden Ansprüche, wobei die Netzwerkemulationseinheit (18) mindestens ein Simulationsmodul (24) zum Erstellen von mindestens einer virtuellen Netzwerkvorrichtung, die mit der ersten zu testenden Vorrichtung (14) kommuniziert, umfasst.

10. Testaufbau zum Testen einer Vorrichtung-zu-Vorrichtung-Kommunikation in einer Netzwerkumgebung, der Folgendes umfasst
ein Testsystem (12) mit einer Netzwerkemulationseinheit (18) zum Emulieren einer Vorrichtung-zu-Vorrichtung-Netzwerkumgebung mit einer Ressource (12) nach einem der vorhergehenden Ansprüche, und
eine erste zu testende Vorrichtung (14), die mit der emulierten Vorrichtung-zu-Vorrichtung-Netzwerkumgebung verbunden ist.

11. Testaufbau nach Anspruch 10, wobei der Testaufbau (10) eine zweite zu testende Vorrichtung (16) umfasst, wobei die zweite zu testende Vorrichtung (16) mit der emulierten Vorrichtung-zu-Vorrichtung-Netzwerkumgebung verbunden ist, wobei die zweite zu testende Vorrichtung (16) dazu ausgelegt ist, mit der ersten zu testenden Vorrichtung (14) und/oder mit der Netzwerkemulationseinheit (18) zu kommunizieren.

12. Verfahren zum Testen des Reservierungsverhaltens einer ersten zu testenden Vorrichtung (14) unter Verwendung eines Testsystems (12) nach einem der Ansprüche 1 bis 9, das die folgenden Schritte umfasst:
a) Emulieren der Vorrichtung-zu-Vorrichtung-Netzwerkumgebung, die eine Ressource (32) aufweist, unter Verwendung der Netzwerkemulationseinheit (18),
b) Einstellen der Ressourcenreservierungsparameter der Ressource (32) der emulierten Netzwerkumgebung,
c) Verbinden der ersten zu testenden Vorrichtung (14) mit der emulierten Netzwerkumgebung,
d) Aufzeichnen und/oder Analysieren von Protokollnachrichten und der Ressourcenreservierungsnachrichten von der und/oder an die erste zu testende Vorrichtung (14) unter Verwendung des Protokolltestmoduls (20),
wobei das Ressourcenreservierungsverhalten die Art, die verbrauchte Leistung und/oder das Leistungsvermögen der ersten zu testenden Vorrichtung zum Scannen der Ressource, zum Identifizieren einer geeigneten verfügbaren Ressource und/oder zum Kommunizieren der Verwendung oder der Reservierung der gefundenen verfügbaren Ressource beinhaltet, und
wobei die Ressourcenreservierungsparameter Informationen über den Status eines Teils der Ressource (32) beinhalten.

13. Verfahren nach Anspruch 12, wobei mindestens eine virtuelle Netzwerkvorrichtung, die mit der ersten zu testenden Vorrichtung (14) kommuniziert, von einem Simulationsmodul (24) des Testsystems (12) erstellt wird.

14. Verfahren nach Anspruch 12 oder 13, wobei das Ressourcenreservierungsmodul (22) das Ressourcenreservierungsverhalten der ersten zu testenden Vorrichtung (14) abfragt und/oder die Netzwerkemulationseinheit (18) die Steuerinformationen und/oder die Ressourcenreservierungsparameter in mindestens einem Teil der Ressource (32) ändert.

## Revendications

1. Système de test configuré pour tester un comportement de réservation d'un premier dispositif en cours de test (14) et ayant une unité d'émulation de réseau (18) pour l'émulation d'un environnement de réseau de dispositif à dispositif avec une ressource (32), **caractérisé par** l'unité d'émulation de réseau (18) comprenant :
un module de test de protocole (20) pour l'enregistrement et/ou l'analyse de messages de protocole, qui incluent des messages de réservation de ressource, à partir du et/ou vers le premier dispositif en cours de test (14), dans lequel le module de test de protocole (20) est configuré pour enregistrer et/ou pour analyser des messages de réservation de ressource à partir du et/ou vers le premier dispositif en cours de test (14), et
un module de réservation de ressource (22) pour la définition de paramètres de réservation de ressource de la ressource de l'environnement de réseau,
dans lequel le comportement de réservation de ressource inclut la manière, la puissance utilisée et/ou les performances du premier dispositif en cours de test pour balayer la ressource, pour identifier une ressource disponible appropriée et/ou pour communiquer l'utilisation ou la réservation de la ressource disponible découverte, et
dans lequel les paramètres de réservation de ressource incluent des informations sur le statut d'une partie de la ressource (32).

2. Système de test selon la revendication 1, dans lequel la ressource (32) de l'environnement de réseau est une grappe de ressources pour une communication de dispositif à dispositif.

3. Système de test selon la revendication 1 ou 2, dans lequel l'environnement de réseau de dispositif à dispositif comprend des allocations de bloc de ressource.

4. Système de test selon l'une quelconque des revendications précédentes, dans lequel les paramètres de réservation de ressource incluent des informations sur le statut d'un bloc de ressource (34) et/ou d'un élément de ressource de la ressource.

5. Système de test selon la revendication 4, dans lequel les informations incluent le statut de réservation et/ou le niveau de puissance de la partie de la ressource (32).

6. Système de test selon l'une quelconque des revendications précédentes, dans lequel le module de réservation de ressource (22) est configuré pour mettre au défi le comportement de réservation de ressources du premier dispositif en cours de test (14).

7. Système de test selon l'une quelconque des revendications précédentes, dans lequel l'unité d'émulation de réseau est conçue pour définir des informations de commande et/ou des paramètres de réservation de ressource dans au moins une partie de la ressource (32).

8. Système de test selon l'une quelconque des revendications précédentes, dans lequel le module de réservation de ressource (22) a accès à une mémoire (38) ayant au moins un jeu de paramètres de réservation de ressource.

9. Système de test selon l'une quelconque des revendications précédentes, dans lequel l'unité d'émulation de réseau (18) comprend au moins un module de simulation (24) pour la création d'au moins un dispositif de réseau virtuel communiquant avec le premier dispositif en cours de test (14).

10. Installation de test pour tester une communication de dispositif à dispositif dans un environnement de réseau, comprenant
un système de test (12) ayant une unité d'émulation de réseau (18) pour l'émulation d'un environnement de réseau de dispositif à dispositif avec une ressource (12) selon l'une quelconque des revendications précédentes, et
un premier dispositif en cours de test (14) connecté à l'environnement de réseau de dispositif à dispositif émulé.

11. Installation de test selon la revendication 10, dans laquelle l'installation de test (10) comprend un second dispositif en cours de test (16), dans laquelle le second dispositif en cours de test (16) est connecté à l'environnement de réseau de dispositif à dispositif émulé, dans lequel le second dispositif en cours de test (16) est configuré pour communiquer avec le premier dispositif en cours de test (14) et/ou l'unité d'émulation de réseau (18).

12. Procédé pour tester le comportement de réservation d'un premier dispositif en cours de test (14) à l'aide d'un système de test (12) selon l'une quelconque des revendications 1 à 9, comprenant les étapes suivantes :
a) l'émulation d'un environnement de réseau de dispositif à dispositif ayant une ressource (32) à l'aide de l'unité d'émulation de réseau (18),
b) la définition des paramètres de réservation de ressource de la ressource (32) de l'environnement de réseau émulé,
c) la connexion du premier dispositif en cours de test (14) avec l'environnement de réseau émulé,
d) l'enregistrement et/ou l'analyse de messages de protocole et des messages de réservation de ressource à partir du et/ou vers le premier dispositif en cours de test (14) à l'aide du module de test de protocole (20),
dans lequel le comportement de réservation de ressource inclut la manière, la puissance utilisée et/ou les performances du premier dispositif en cours de test pour balayer la ressource, pour identifier une ressource disponible appropriée et/ou pour communiquer l'utilisation ou la réservation de la ressource disponible découverte, et
dans lequel les paramètres de réservation de ressource incluent des informations sur le statut d'une partie de la ressource (32).

13. Procédé selon la revendication 12, dans lequel au moins un dispositif de réseau virtuel communiquant avec le premier dispositif en cours de test (14) est créé par un module de simulation (24) du système de test (12).

14. Procédé selon la revendication 12 ou 13, dans lequel le module de réservation de ressource (22) met au défi le comportement de réservation de ressources du premier dispositif en cours de test (14) et/ou l'unité d'émulation de réseau (18) change les informations de commande et/ou des paramètres de réservation de ressource dans au moins une partie de la ressource (32).
